# EUROPEAN PATENT SPECIFICATION

(11) **EP 3 017 981 B1**
(45) Date of publication and mention of the grant of the patent: **08.08.2018**
(21) Application number: 15193691.1
(22) Date of filing: 09.11.2015
(51) Int. Cl.: B60H 1/00

(54) **METHOD AND SYSTEM FOR PREDICTING REMAINING USEFUL LIFE OF TRANSPORT UNITS**
VERFAHREN UND SYSTEM ZUR VORHERSAGE DER VERBLEIBENDEN LEBENSDAUER VON TRANSPORTEINHEITEN
PROCÉDÉ ET SYSTÈME POUR PRÉDIRE LA DURÉE DE VIE UTILE RESTANTE D'UNITÉS DE TRANSPORT

(30) Priority: 10.11.2014 US 201414537454
(43) Date of publication of application: 11.05.2016
(73) Proprietor: Thermo King Corporation, Minneapolis, MN 55420 (US)
(72) Inventor: Hamrouni, Michel, 3220 Holsbeek (BE); P S, Rajesh, 572 101 Tumkur (IN); Balakrishna, Abhijith, 560 061 Bangalore (IN); Tom, Josin, 686 539 Kottayam (IN)
(74) Representative: Haseltine Lake LLP

(56) References cited:
- US-A- 4 882 564
- US-A1- 2011 022 532
- US-A1- 2013 271 290
- DATABASE WPI Week 200604 Thomson Scientific, London, GB; AN 2006-034546 XP002759793, -& JP 2005 351618 A (MITSUBISHI ELECTRIC CORP) 22 December 2005 (2005-12-22)
- DATABASE WPI Week 201280 Thomson Scientific, London, GB; AN 2012-Q57695 XP002759794, -& JP 2012 232656 A (MITSUBISHI ELECTRIC CORP) 29 November 2012 (2012-11-29)
- United Nations Publication: "AGREEMENT ON THE INTERNATIONAL CARRIAGE OF PERISHABLE FOODSTUFFS AND ON THE SPECIAL EQUIPMENT TO BE USED FOR SUCH CARRIAGE (ATP)", , 23 September 2013 (2013-09-23), XP055287844, ISBN: 978-92-1-139147-3 Retrieved from the Internet: URL:http://www.unece.org/fileadmin/DAM/tra ns/main/wp11/wp11doc/ATP-2013_e.pdf [retrieved on 2016-07-12]

## Description

### FIELD

The embodiments disclosed herein relate generally to a transport refrigeration system (TRS). More particularly, the embodiments relate to methods and systems for predicting a remaining useful life of a transport unit, for example, a conditioned trailer, of a transport refrigeration system (TRS).

### BACKGROUND

Existing transport refrigeration systems (TRSs) are used to cool trailers (e.g., trailer on flat cars, etc.), containers (e.g., containers on flat cars, intermodal containers, etc.), trucks, box cars and other similar transport units (TU; typically referred to as a "refrigerated transport unit"). Typically, a transport refrigeration unit ("TRU") is attached to the transport unit to facilitate a controlled environment condition (e.g., temperature, humidity, air quality and the like) in cargo space during transport. The TRU can include, without limitation, a compressor, a condenser, an expansion valve, an evaporator, and fans or blowers to control the heat exchange between the air inside the cargo space and the ambient air outside of the refrigerated transport unit. Examples of cooling systems are described in JP 2005/351618, JP 2012/232656, US 2011/022532, US2013271290 and US4882564.

### SUMMARY

The embodiments described herein generally relate to a TRS, and are directed to methods and systems for optimizing the total cost of ownership (TCO) and/or predicting a remaining useful life of one or more components of a TRS. According to the invention, the methods and systems involve predicting a useful life of a transport unit, e.g., a refrigerated transport unit. In the embodiments that follow, the methods and systems will be described with reference to a refrigerated transport unit. However, it is to be realized that the concepts herein can be applied to other units that utilize an HVAC system, e.g., buses, trains, commercial, industrial and/or residential buildings, etc.

The phrase "remaining useful life of a transport unit" refers to an amount of time that the transport unit can perform its intended function, e.g., within a certain fuel consumption rate, relative to its thermal resistance. That is, in general, a transport unit such as a refrigerated transport unit, is configured to perform a specific function, e.g., carry cargo such as fruits, vegetables, flowers, pharmaceuticals and/or maintain a certain temperature conditions, for example, heated and/or deep freeze condition over a prolonged period of time. In order to perform this intended function, e.g., within a certain fuel consumption rate, the refrigerated transport unit is manufactured to have a certain thermal resistance, for example, by insulating the walls of the transport unit with polyurethane foam.

The term "thermal resistance" refers to the ability of a transport unit, e.g., a refrigerated transport unit, to maintain a temperature differential between an interior space within the transport unit and the exterior ambient temperature outside of the transport unit. In some examples, the thermal resistance is based on the transport unit only, and is independent of the TRU performance.

The phrase "the total cost of ownership (TCO)" generally refers to a financial estimate intended to provide a cost basis for determining an economic value of one or more components of a TRS, which can consider factors such as cost of acquisition and/or operating costs. The phrase "optimizing the total cost of ownership (TCO)" means that factors such as operating costs are optimized, e.g., by utilization of refrigerated transport units that are determined to have the greatest thermal resistance to the most demanding jobs, detection of anomalies, e.g., holes or cracks in the wall, moisture inside insulation, gaps in seals of doors, in order to save costs.

In practice, the thermal resistance of a refrigerated transport unit is not constant, and degrades over time due to wear and tear of the transport unit. As such, the refrigerated transport unit generally has a limited useful life. As used herein, the term "useful life" refers to the total amount of time that the refrigerated transport unit can perform its intended function, e.g., within a certain fuel consumption rate, and the term "remaining useful life" refers to the amount of time remaining in the useful life of the refrigerated transport unit. The invention is defined in the attached independent claims to which reference should now be made. Further, optional features may be found in the sub-claims appended thereto. In general, the methods and systems described herein allow optimization of the total cost of ownership (TCO) and/or the prediction of the remaining useful life of a transport unit, e.g., a refrigerated transport unit. One of many advantages of the methods and systems is the better utilization of a fleet of refrigerated transport units, which can lead to reduced fuel usage and improved operational efficiencies.

In one embodiment, a method for predicting a remaining useful life of a transport unit is provided. The method includes determining one or more values for one or more parameters that is indicative of a thermal resistance of a transport unit. The method also includes estimating an amount of time remaining in the useful life of the transport unit.

In another embodiment, a TRS for a refrigerated transport unit is provided. The TRS includes a refrigeration circuit including a compressor, a condenser, an evaporator, and a thermal expansion device. The TRS also includes a TRS controller configured to control the refrigeration circuit. In some examples, the TRS controller includes a memory portion and a processor and is configured to determine one or more values for one or more parameters that are indicative of a thermal resistance of a trailer and estimate an amount of time remaining in the useful life of the transport unit. In some examples, the TRS controller can be configured to use sensor to determine faults such as cracks or holes in the wall, moisture inside the insulation, gaps in seals of doors, faulty load distribution" or TRU malfunction.

### BRIEF DESCRIPTION OF THE DRAWINGS

The foregoing and other features, aspects and advantages of the invention are apparent from the following detailed description taken in conjunction with the accompanying drawings in which like characters represent like parts throughout the drawings, wherein:
Fig. 1 illustrates one embodiment of a TRS comprising a TRU;
Fig. 2 illustrates a schematic illustration of a remaining useful life prediction system, according to one embodiment;
Fig. 3 illustrates a side view of an exemplary configuration of a system when conducting a thermal resistance test, according to one embodiment;
Fig. 4 illustrates an isometric view of another exemplary configuration of a system when conducting a thermal resistance test, according to one embodiment;
Fig. 5 illustrates a graph showing an exemplary result of a thermal resistance test, according to one embodiment;
Fig. 6 illustrates a graph showing a thermal resistance of a transport unit over time, according to one embodiment; and
Fig. 7 is a flow chart showing a method for predicting a useful life of a transport unit, according to one embodiment.
Fig. 8 is a flow chart showing a method for managing a fleet of transport units, according to one embodiment.

While the above-identified drawing figures set forth alternative embodiments, other embodiments are also contemplated, as noted in the discussion. In all cases, this disclosure presents illustrated embodiments by way of representation and not limitation. Numerous other modifications and embodiments can be devised by those skilled in the art which fall within the scope of the claims.

### DETAILED DESCRIPTION

The embodiments described herein are generally directed to methods and systems for predicting a remaining useful life of one or more components of a TRS. According to the invention, the methods and systems involve predicting a useful life of a transport unit. In the description that follows, methods and systems involving the prediction of a useful life of a refrigerated transport unit will be described. However, it is to be realized that the concepts herein may be applied to other types of transport units and other components of a TRS. Also, in the description that follows, the methods and systems will be described where the refrigerated transport unit has an intended function of cooling the unit. However, it is to be realized that the concepts herein may be applied where the refrigerated transport unit has an intended function of conditioning the internal space of the unit to any set condition(s), for example, a certain heated temperature, humidity condition, etc.

References are made to the accompanying drawings that form a part hereof, and in which is shown by way of illustration of the embodiments in which the methods and systems described herein may be practiced. The term "refrigerated transport unit" generally refers to, for example, an environmentally conditioned trailer, container, railcars or other type of transport unit, etc. The term "transport refrigeration system" or "TRS" refers to a refrigeration system for controlling an environmental condition of an interior space of a transport unit. The term "TRS Controller" refers to an electronic device that is configured to manage, command, direct and regulate the behavior of one or more TRS components including one or more components of a refrigeration circuit (e.g., an evaporator, a condenser, a compressor, an expansion valve (EXV), etc.), a genset, etc.

It will be appreciated that the embodiments described herein may be used in any suitable temperature controlled apparatus such as a ship board container, an air cargo cabin, an over the road truck cabin, a train or rail refrigeration system, etc. The TRS generally may be a vapor-compressor type refrigeration system, or any other suitable refrigeration system that can use refrigerant, cold plate technology, cryogenic technology, etc.

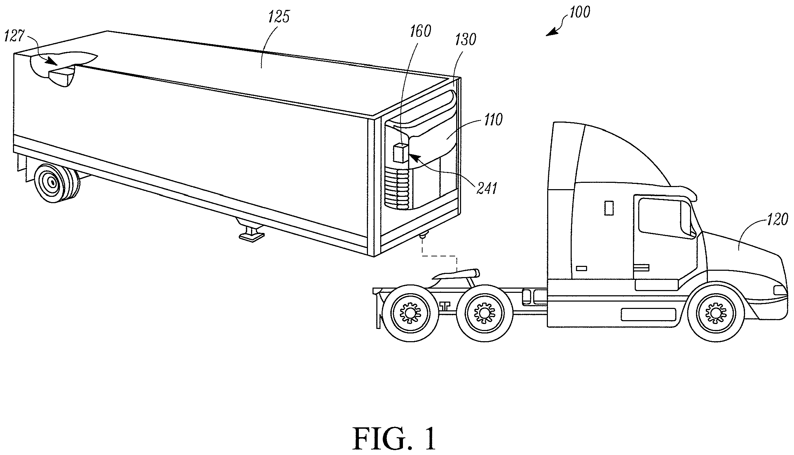

Fig. 1 illustrates one embodiment of a TRS 100 for a transport unit (TU) 125 that is attached to a tractor 120. The TRS 100 includes a TRU 110 that controls an environmental condition (e.g., humidity, air quality, temperature, etc.) of an internal space 127 within the TU 125. The TRU 110 is disposed on a front wall 130 of the TU 125. The tractor 120 is attached to and is configured to tow the transport unit 125. It will be appreciated that the embodiments described herein are not limited to trucks and trailer units, but can just as easily apply to any other suitable temperature controlled apparatuses such as a ship board container, an air cargo container or cabin, an over the road truck cabin, among others. The TRU 110 includes a programmable TRS Controller 241 made up of a single integrated control unit 160. It is appreciated that in other embodiments, the TRS controller 241 may be formed of a distributed network of TRS control elements (not shown). The number of distributed control elements in a given network can depend upon the particular application of the principles described herein.

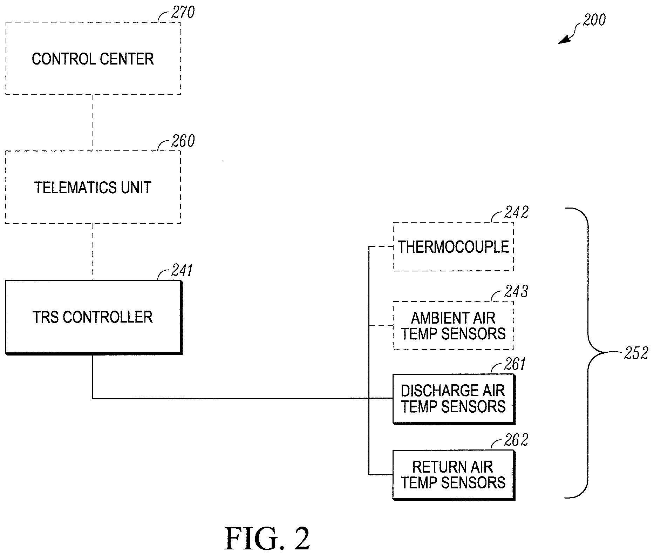

Figure 2 is a schematic illustration of a remaining useful life prediction system 200, according to one embodiment. The system 200 includes two or more sensors 252 and the TRS controller 241. In other embodiments, the system 200 may include a single sensor 252. In general, the TRS controller 241 includes a processor (not shown), a memory (not shown), a clock (not shown) and an input/output (I/O) interface (not shown) and can be configured to receive data as input from various components within the TRS 100, and send command signals as output to various components within the TRS 100.

Generally, the TRS Controller 241 can be configured to control an environmental condition within a TU 125. In one example, the TRS Controller 241 can control a refrigeration circuit of the TRS 100 to obtain various operating environmental conditions (e.g., temperature, humidity, air quality, etc.) of an internal space within a TU, e.g., the internal space 127 as is generally understood in the art.

The TRS Controller 241 can be further configured to receive information from the two or more sensor 252 through the I/O interface as inputs, process the received information using the processor based on an algorithm stored in the memory, and send command signal as an output, to the components of the TRS 100. In the description that follows, the TRS Controller 241 will be described as implementing the disclosed method. However, it is to be realized that other controllers can be utilized to perform the same functions. Examples of other controllers can include an optional a telematics unit 260 and an optional control center 270 as shown in Figure 2. In some embodiments, the telematics unit 260 and/or the control center 270 includes a processor (not shown), a memory (not shown), a clock (not shown) and an input/output (I/O) interface (not shown) similarly to the TRS Controller 241 described above. In some instances, the telematics unit 260 can be part of the TRS 100 and the control center 270 can be located external to the TU 125.

In the embodiments shown in Figure 2, the sensors 252 include an optional thermocouple 242 configured to measure a temperature of the internal space 127 of the TU 125, an optional ambient temperature sensor 243 configured to measure an ambient temperature, a discharge air temperature sensor 261 configured to measure a discharge air temperature, and a return air temperature sensor 262 configured to measure a return air temperature. It is to be realized that other sensors can be included in the system 200 depending on the type of data used for implementing the disclosed method of predicting the remaining useful life of the transport unit.

Details of the various algorithms that can be stored in the memory of the TRS Controller 241 will now be provided below.

Generally, the TRS Controller 241 can be configured to implement the disclosed process for predicting a remaining useful life of a transport unit. In general, the disclosed process can be executed by the executing program instructions (algorithms) stored in the memory of, for example, the TRS Controller 241.

In general, the methods and systems described herein involves measuring one or more values for one or more parameters, determining a thermal resistance of the transport unit 125 based on the measured parameters, and estimating an amount of time remaining in the useful life of the transport unit 125. An advantage of these methods and systems is that better utilization of a fleet of transport units can be achieved, thereby leading to reduced fuel usage and improved operational efficiencies.

Details of the thermal resistance of a transport unit will now be described. Generally, the transport unit has a certain thermal resistance, which is an ability to maintain a temperature differential between an interior space within the TU and an exterior ambient temperature outside the TU. In some examples, the thermal resistance can be based on the transport unit, and can be independent of the performance of the TRU. The transport unit 125 has a limited useful life, which refers to the total amount of time that the transport unit 125 can perform its intended function, e.g., within a certain fuel consumption rate. In some examples, the useful life of the transport unit 125 is determined by an industry standard, e.g., "THE AGREEMENT ON THE INTERNATIONAL CARRIAGE OF PERISHABLE FOODSTUFFS AND ON THE SPECIAL EQUIPMENT TO BE USED FOR SUCH CARRIAGE" (ATP), United Nations, 2014. The term "intended function" refers to a specific function that a transport unit such as a refrigerated transport unit is configured to perform, e.g., carry cargo such as meats and maintain a deep freeze condition over a prolonged period of time.

In some examples, the remaining useful life of the transport unit can be predicted using a thermal resistance test. In some examples, a pull-down test can be utilized. In some instances, the results of a pull-down test using certain parameters can be used to determine the thermal resistance of the transport unit.

In some examples, the pull-down test can be conducted on an empty transport unit 125 during a pre-cooling or pre-trip inspection, which involves processes for preparing the transport unit 125 for a voyage. Generally, during a pull-down test, the TRS is controlled to cool down the internal space 127 with closed doors as quickly as possible to a set temperature, and a time taken to reach the set temperature is determined.

In the description that follows, a pull-down test on an empty trailer during a pre-trip investigation will be described, but in some other embodiments, the pull-down test may be conducted in other settings, for example, during a voyage.

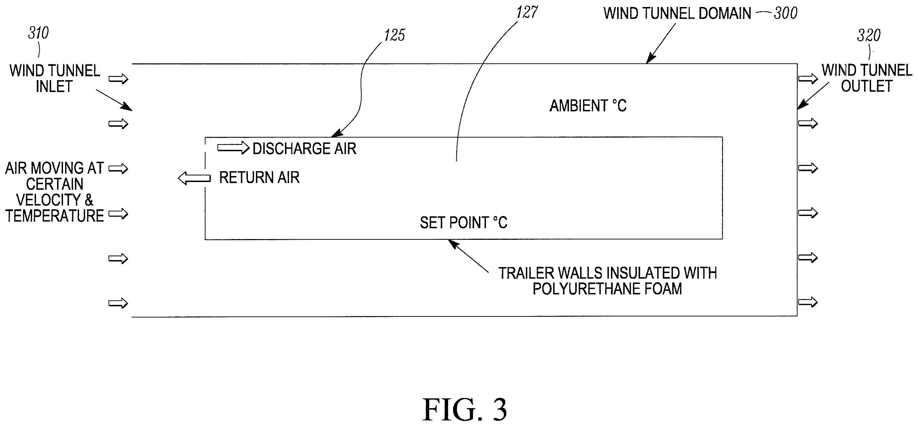

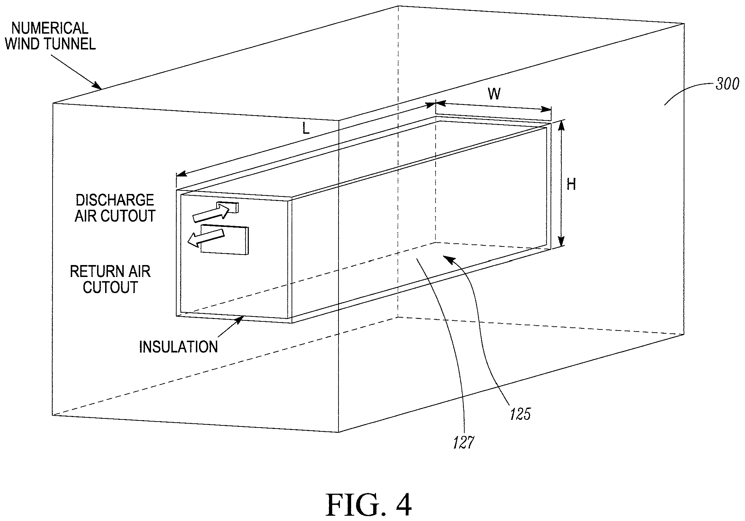

Referring to Figures 3 and 4, in some embodiments, a pull-down test is conducted in a wind tunnel domain 300 having a wind tunnel inlet 310 and a wind tunnel outlet 320. The transport unit 125 is provided within the wind tunnel domain 300 under predetermined conditions, for example, an air movement of X m/s with a set temperature of Y degrees Celsius. In some instances, the values of X can be between about 0.1 to about 2.0 m/s and Y can be between about -10 to about 10 degrees Celsius, alternately about -20 to about 12 degrees Celsius. In some instances, Y is in accordance with an industry standard, e.g., the ATP It is to be realized that the variables X and Y can depend on the parameters being measured, and certain factors, such as the type of transport unit 125 being utilized, etc. In some examples, the variables X and Y are determined by an industry standard, e.g., the ATP.

In general, the pull-down test involves measuring one or more parameters when the transport unit 125 is cooling down the internal space 127 to the set temperature. In some examples, the parameters measured can include a return air temperature, a discharge air temperature, an ambient temperature and the time it takes for the internal space 127 of the transport unit 125 to reach the set temperature, for example, under the predetermined conditions. The term "discharge air temperature" means a temperature of the supply air that enters into the internal space of the transport unit. This can be cooler than the air which goes out of the refrigerated unit. The term "return air temperature" means a temperature of the air going back into the refrigerated transport unit. This can be hotter relative to the discharge air as this air is representative of heat picked up by the air from respiring loads, heat conducted through walls of the transport unit etc. In some examples, the one or more parameters that are used can eliminate the need to consider external influences such as the color of the surface of the transport unit 125, e.g., whether it is white or black, and whether the transport unit 125 has been in sunlight or shade before the pre-trip investigation, for the determination of the thermal resistance.

In general, the one or more parameters are determined using the sensors 252. However, in some instances, the one or more parameters can be determined without the sensors 252. For example, the ambient temperature can be determined using a telematics unit where a GPS location of the transport unit is available so that one of the sensors 252 is not directly used. In this instance, the temperature can be determined, for example, by using a global weather map available through the internet based on the GPS location.

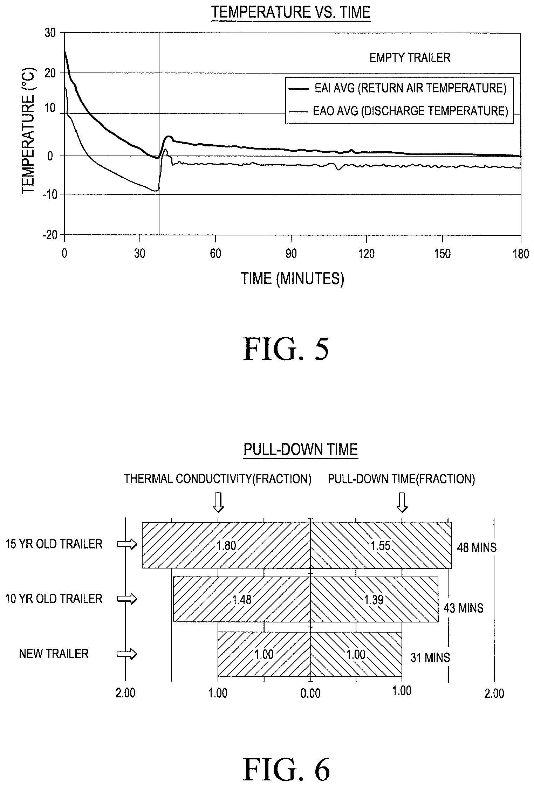

One example of a pull-down curve of a pull down test of a transport unit is provided in Figure 5. The pull-down curve shows the amount of time it takes for the transport unit to reach set temperatures for the two measured parameters, namely, the return air temperature and the discharge air temperature. In some examples, one or more thermocouples can be used to monitor the temperature inside the transport unit. In the results shown in Figure 5, the transport unit exhibited a pull-down time of about 34 minutes. In this instance, the transport unit has properties such that the time for the return air temperature to reach a set temperature of about 0 degrees Celsius from about 25 degrees Celsius is about 34 minutes and the time for the discharge air temperature to reach a set temperature of about -10 degrees Celsius from about 15 degrees Celsius also was about 34 minutes. In some examples, the pull-down time can be used to characterize the thermal resistance of the transport unit, and the thermal resistance can be used to predict the remaining useful life of the transport unit, which is described in further detail below.

In general, as shown in Figure 6, the pull-down time of transport units increases over time. For instance, a new transport unit typically can have a pull-down time of about 31 minutes, whereas a 10 year old transport unit can have a pull-down time of about 43 minutes and a 15 year old transport unit can have a pull-down time of about 48 minutes. In some examples, the measured pull-down time of the transport unit using the parameters mentioned above, namely, the return air temperature, the discharge air temperature and the ambient temperature, can be indicative of the thermal resistance of the transport unit 125.

In some examples, the measured pull-down time can be compared with a reference pull-down time. In some examples, the reference pull-down time can be obtained using simulated conditions. In some instances, the simulated conditions can involve models using a transport unit having the same configuration as that of the one being measured. For instance, the model transport unit would include the same materials such as polyurethane foam, meat hooks, etc., with a similar thermal mass. In some examples, the models can identify the unique configuration and deterioration conditions of the transport unit being measured. For instance, the models can identify if the transport unit is configured for transportation of meats, which would mean that the transport unit carries meat hooks. In general, meat hooks can have a high thermal mass, and such consideration can be incorporated into the models.

In some instances, the comparison can be used to predict a remaining useful life of a transport unit. In some instances, the comparison can be done annually. In some instances, the comparison can be done at a frequency shorter than a one year period. For example, in some cases, the comparison can be done in "real-time". In some instances, the prediction of the remaining useful life of the transport can be based on a long-term trend of the measured pull-down times.

In some examples, a pull-down time of a transport unit can be measured at the beginning of the useful life of the transport unit. In some examples, pull-down times then can be tracked over the life of the transport unit to determine the remaining useful life of the transport unit. In some examples, the pull-down times can be compared with a threshold. In some instance, the threshold can be based on an industry standard. In some examples, the threshold is based on an expected performance output of the transport unit. In some examples, the expected performance output can involve the transport unit maintaining a certain thermal resistance within a certain fuel consumption rate.

In some instances, the pull-down times can be accumulated over an entire fleet through a telematics unit and stored in a database within a control center. In some examples, if the pull-down times do not meet the threshold, then the transport unit can be determined to be no longer being suitable for use as a refrigerated transport unit. In this instance, the transport unit can be used for non-refrigerated use. In this way, a fleet of transport units can be better utilized using the methods and systems described herein.

In some examples, the determination is based on a sliding scale where pull-down times can be scaled, for example, from 0% refrigeration grade activities to 100% refrigeration grade activities. In this instance, a transport unit that exhibits 50% refrigeration grade activities can be used as a refrigerated transport unit, e.g., with half the refrigeration demands as compared to a refrigerated transport unit with rigorous demands. Once it is determined that a transport unit has 0% refrigeration grade activities, it can be decommissioned. At this juncture, a determination also may be made as to whether it would be better to keep using the transport unit for a certain time period or purchase a new one.

It is to be realized that the test procedures in determining the thermal resistance of the transport unit can involve the use of parameters other than the pull-down times, e.g., a temperature difference (delta T) between a mean outside temperature and a mean inside temperature. In some instances, both the pull-down times and the delta T values can be used to indicate the thermal resistance.

In some implementations, the pull-down times can be used together, for example, with the delta T to provide diagnostics. In some examples, where the delta T is unchanged and the pull down time is unchanged, this indicates that the transport unit is in acceptable conditions. If the delta T is unchanged but the pull down time is increased, this indicates that the insulation of the transport unit needs to be checked. If the delta T is decreased a certain amount and the pull down is time increased a certain amount, then this means that the transport unit should be checked. If the delta T is increased and the pull down time is unchanged, this can indicate that the airflow should be checked. If the delta T is decreased a certain amount and the pull down time is increased a certain amount such that y is greater than x, than the insulation of the transport unit should be checked.

In some instances, the determination of the remaining useful life of the transport unit assumes that the refrigeration unit is not defective. However, it is to be realized that in some instances, the thermal resistance of the transport unit may be used to determine whether the transport refrigeration unit itself is defective by using certain parameters in determining the thermal resistance and/or comparing with a certain threshold. In some other examples, the thermal resistance of the transport unit may be used to detect other faults such as refrigerant leakage.

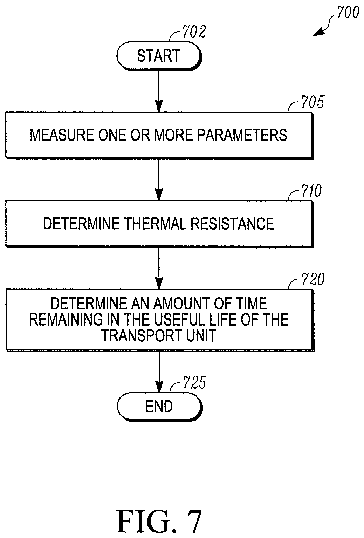

Fig. 7 illustrates one embodiment of a method 700 for predicting a useful life of the transport unit 125 using the system 200 illustrated in Fig. 2. The method starts at 702. Then, at 705, one or more parameters are measured during a thermal resistance test of the transport unit using the sensors 252. In some examples, the thermal resistance test is a pull-down test. The one or more parameters can include a return air temperature, a discharge air temperature and an ambient temperature. It is to be realized that other parameters may be used to determine the thermal resistance of the transport unit 125.

Then, at 710, the thermal resistance of the transport unit 125 is determined based on the measured parameters. In the instance where a pull-down test is utilized for the thermal resistance test, a pull-down time can be determined based on the measured parameters, for example, a return air temperature, a discharge air temperature and an ambient temperature. In this instance, the pull-down time is indicative of the thermal resistance of the transport unit 125.

Then, at 720, an amount of time remaining in the useful life of the transport unit is estimated. In some instances, the estimate is determined by comparing the pull-down time determined in 710 with a reference pull-down time. In some examples, the reference pull-down time can be determined by simulated conditions.

Then, at 725, the process 700 ends.

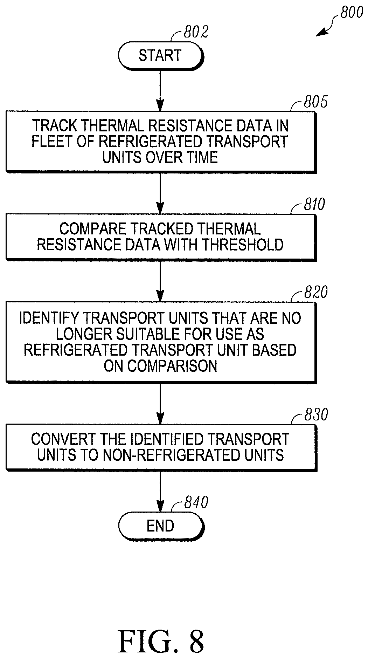

Fig. 8 illustrates one embodiment of a method 800 for managing a fleet of transport units using the system 200 illustrated in Fig. 2. The method starts at 802. Then, at 805, the thermal resistance data in a fleet of refrigerated transport units is tracked over time, for example, by measuring one or more parameters during a thermal resistance test of the transport units using the sensors 252 over the life of the transport units. In some examples, the thermal resistance data is obtained through pull-down tests. The one or more parameters can include a return air temperature, a discharge air temperature and an ambient temperature. It is to be realized that other parameters may be used to obtain the thermal resistance data of the transport units.

Then, at 810, the thermal resistance data of the transport units are compared with a threshold. In some examples, the thermal resistance data of the transport units include pull-down times of the transport units over the life of the transport units. In some examples, the pull-down times can be compared with a threshold. In some instance, the threshold can be based on an industry standard. In some examples, the threshold is based on an expected performance output of the transport unit. In some examples, the expected performance output can involve the transport unit maintaining a certain thermal resistance within a certain fuel consumption rate.

Then, at 820, transport units that are no longer suitable for use as refrigerated transport units are identified based on the comparison. In some instances, when the thermal resistance of a transport unit is below a certain threshold, e.g., based on an industry standard as discussed above, then that transport unit is determined to be no longer useful as a refrigerated transport unit.

Then, at 830, the transport units identified to be no longer useful as refrigerated transport units are converted to non-refrigerated units. The conversion can involve, for example, the identified transport unit being labeled in a database within the control center as a non-refrigerated unit.

Then, at 840, the process 800 ends.

An advantage of the methods and systems is that better utilization of a fleet of refrigerated transport units can be achieved, thereby leading to reduced fuel usage and improved operational efficiencies.

With regard to the foregoing description, it is to be understood that changes may be made in detail, especially in matters of the construction materials employed and the shape, size and arrangement of the parts without departing from the scope of the present invention. It is intended that the specification and depicted embodiment to be considered exemplary only, with a true scope of the invention being indicated by the broad meaning of the claims.

## Claims

1. A transport refrigeration system, comprising:
a transport unit (125);
a sensor (252) for measuring a parameter; and
a controller (241) that is configured to predict a remaining useful life of the transport unit (125) using the parameter;
**characterized in that**:
the controller (241) is configured to determine a thermal resistance of the transport unit (125) based on the parameter.

2. The system of claim 1, wherein the parameter is at least one selected from the group consisting of a return air temperature, a discharge air temperature, a temperature of an internal space of the transport unit and an ambient temperature.

3. The system of claim 1, wherein the controller (241) is configured to measure the parameter during a thermal resistance test.

4. The system of claim 3, wherein the thermal resistance test is a pull-down test.

5. The system of claim 4, wherein the controller (241) is configured to determine a pull-down time based on the measured parameter.

6. The system of claim 5, wherein the controller (241) is configured to determine an amount of time remaining in the useful life of the transport unit based on the pull-down time.

7. The system of claim 6, wherein the controller (241) is configured to determine the amount of time remaining in the useful life of the transport unit by comparing the determined pull-down time with a reference pull-down time.

8. A method for predicting a remaining useful life of a transport unit (125), comprising:
determining a parameter of a transport unit (125); and
estimating an amount of time remaining in the useful life of the transport unit (125); **characterized by**:
determining a thermal resistance of the transport unit (125) based on the parameter.

9. The method of claim 8, wherein the parameter is at least one selected from the group consisting of a return air temperature, a discharge air temperature, a temperature of an internal space of the transport unit and an ambient temperature.

10. The method of claim 8, wherein the thermal resistance test is a pull-down test.

11. The method of claim 10, wherein determining the thermal resistance includes measuring a pull-down time during the pull-down test.

12. The method of claim 11, wherein the amount of time remaining in the useful life of the transport unit is determined by comparing the determined pull-down time with a reference pull-down time.

13. A method of managing a fleet of transport units (125), **characterized by**:
tracking thermal resistance data in a fleet of transport units (125);
comparing the tracked thermal resistance data with a threshold;
identifying transport units (125) that are no longer suitable for use as a refrigerated transport unit based on the comparison; and
converting the identified transport units (125) to non-refrigerated transport units.

14. The method of claim 13, wherein the thermal resistance data is data based on a pull-down test.

15. The method of claim14, wherein tracking the thermal resistance data includes measuring a pull down time of a transport unit during the pull-down test.

## Patentansprüche

1. Transportkühlanlage, umfassend:
eine Transporteinheit (125);
einen Sensor (252) zum Messen eines Parameters; und
eine Steuereinheit (241), die dafür ausgelegt ist, die Restnutzungsdauer der Transporteinheit (125) anhand des Parameters vorherzusagen;
**dadurch gekennzeichnet, dass**:
die Steuereinheit (241) dafür ausgelegt ist, den Wärmewiderstand der Transporteinheit (125) anhand des Parameters zu bestimmen.

2. System gemäß Anspruch 1, wobei sich der Parameter mindestens aus Rücklufttemperatur, Ablufttemperatur, Innenraumtemperatur der Transporteinheit und Umgebungstemperatur zusammensetzt.

3. System gemäß Anspruch 1, wobei die Steuereinheit (241) dafür ausgelegt ist, den Parameter während des Wärmewiderstandstests zu messen.

4. System gemäß Anspruch 3, wobei der Wärmewiderstandstest ein Pull-Down-Test ist.

5. System gemäß Anspruch 4, wobei die Steuereinheit (241) dafür ausgelegt ist, die Pull-Down-Zeit anhand des gemessenen Parameters zu bestimmen.

6. System gemäß Anspruch 5, wobei die Steuereinheit (241) dafür ausgelegt ist, die Restnutzungsdauer der Transporteinheit anhand der Pull-Down-Zeit zu bestimmen.

7. System gemäß Anspruch 6, wobei die Steuereinheit (241) dafür ausgelegt ist, die Restnutzungsdauer der Transporteinheit zu bestimmen, indem die berechnete Pull-Down-Zeit mit einer Referenz-Pull-Down-Zeit verglichen wird.

8. Verfahren zum Prognostizieren der Restnutzungsdauer einer Transporteinheit (125), umfassend:
einen Parameter einer Transporteinheit (125) bestimmen; und
die Restnutzungsdauer der Transporteinheit (125) abschätzen; **dadurch gekennzeichnet, dass**:
der Wärmewiderstand der Transporteinheit (125) anhand des Parameters bestimmt wird.

9. Verfahren gemäß Anspruch 8, wobei sich der Parameter mindestens aus Rücklufttemperatur, Ablufttemperatur, Innenraumtemperatur der Transporteinheit und Umgebungstemperatur zusammensetzt.

10. Verfahren gemäß Anspruch 8, wobei der Wärmewiderstandstest ein Pull-Down-Test ist.

11. Verfahren gemäß Anspruch 10, wobei die Bestimmung des Wärmewiderstands das Messen der Pull-Down-Zeit während des Pull-Down-Tests umfasst.

12. Verfahren gemäß Anspruch 11, wobei die Restnutzungsdauer der Transporteinheit bestimmt wird, indem die berechnete Pull-Down-Zeit mit einer Referenz-Pull-Down-Zeit verglichen wird.

13. Verfahren zur Verwaltung einer Flotte von Transporteinheiten (125), **dadurch gekennzeichnet, dass**:
die Wärmewiderstandsdaten in einer Flotte von Transporteinheiten (125) verfolgt werden;
die verfolgten Wärmewiderstandsdaten mit einem Schwellenwert verglichen werden;
Transporteinheiten (125) identifiziert werden, die aufgrund des Vergleichs nicht länger als Kühltransporteinheit geeignet sind; und
die identifizierten Transporteinheiten (125) zu nicht gekühlten Transporteinheiten umgewandelt werden.

14. Verfahren gemäß Anspruch 13, wobei die Wärmewiderstandsdaten auf dem Pull-Down-Test basieren.

15. Verfahren gemäß Anspruch 14, wobei die Verfolgung der Wärmewiderstandsdaten umfasst, die Pull-Down-Zeit der Transporteinheit während des Pull-Down-Tests zu messen.

## Revendications

1. Un système de réfrigération de transport, comprenant :
une unité de transport (125) ;
un capteur (252) de mesure de paramètre ; et
un contrôleur (241) configuré pour prédire une durée de vie utile restante de l'unité de transport (125) en utilisant le paramètre ;
**caractérisé en ce que** :
le contrôleur (241) est configuré pour déterminer une résistance thermique de l'unité de transport (125) sur la base du paramètre.

2. Le système selon la revendication 1, dans lequel le paramètre est au moins un paramètre choisi dans le groupe constitué d'une température d'air de retour, d'une température d'air de décharge, d'une température d'un espace interne de l'unité de transport et d'une température ambiante.

3. Le système selon la revendication 1, dans lequel le contrôleur (241) est configuré pour mesurer le paramètre pendant un test de résistance thermique.

4. Le système selon la revendication 3, dans lequel le test de résistance thermique est un test d'abaissement.

5. Le système selon la revendication 4, dans lequel le contrôleur (241) est configuré pour déterminer un temps d'abaissement basé sur le paramètre mesuré.

6. Le système selon la revendication 5, dans lequel le contrôleur (241) est configuré pour déterminer une durée restante dans la vie utile de l'unité de transport sur la base du temps d'abaissement.

7. Le système selon la revendication 6, dans lequel le contrôleur (241) est configuré pour déterminer une durée restante dans la vie utile de l'unité de transport en comparant le temps d'abaissement déterminé avec un temps d'abaissement de référence.

8. Un procédé pour prédire une durée de vie utile restante d'une unité de transport (125), comprenant :
la détermination d'un paramètre d'une unité de transport (125) ; et
l'estimation d'une durée restante dans la vie utile de l'unité de transport (125) ;
**caractérisé par** :
la détermination d'une résistance thermique de l'unité de transport (125) sur la base du paramètre.

9. Le procédé selon la revendication 8, dans lequel le paramètre est au moins un paramètre choisi dans le groupe constitué d'une température d'air de retour, d'une température d'air de décharge, d'une température d'espace interne de l'unité de transport et d'une température ambiante.

10. Le procède selon la revendication 8, dans lequel le test de résistance thermique est un test d'abaissement.

11. Le procédé selon la revendication 10, dans lequel la détermination de la résistance thermique comprend la mesure d'un temps d'abaissement pendant le test d'abaissement.

12. Le procédé selon la revendication 11, dans lequel la quantité de temps restant dans la vie utile de l'unité de transport est déterminée en comparant le temps d'abaissement déterminé avec un temps d'abaissement de référence.

13. Un procédé de gestion d'une flotte d'unités de transport (125), **caractérisé par** :
le suivi des données de résistance thermique dans une flotte d'unités de transport (125) ;
la comparaison des données de résistance thermique suivies avec un seuil ;
l'identification des unités de transport (125) qui ne peuvent plus être utilisées comme unité de transport réfrigérée sur la base de la comparaison ; et
la conversion des unités de transport identifiées (125) en unités de transport non réfrigérées.

14. Le procédé selon la revendication 13, dans lequel les données de résistance thermique sont des données basées sur un test d'abaissement.

15. Le procédé selon la revendication 14, dans lequel le suivi des données de résistance thermique comprend la mesure du temps d'abaissement d'une unité de transport pendant le test d'abaissement.
